# EUROPEAN PATENT SPECIFICATION

(11) **EP 1 336 810 B1**
(45) Date of publication and mention of the grant of the patent: **15.06.2005**
(21) Application number: 03250391.4
(22) Date of filing: 22.01.2003
(51) Int. Cl.: F28D 7/10, F01N 7/08, F02M 25/07, F02D 21/08, F01N 3/04

(54) **Joining structure of piping to a flange**
Verbindungsstruktur von Rohren zu einer Flansch
Structure de liaison de conduits sur une bride

(30) Priority: 18.02.2002 JP 2002040665; 27.05.2002 JP 2002153157; 05.11.2002 JP 2002321840
(43) Date of publication of application: 20.08.2003
(73) Proprietor: Sanoh Kogyo Kabushiki Kaisha, Koga-shi, Ibaraki 306-0041 (JP)
(72) Inventor: Sunaga, Yasuo, Koga-shi, Ibaraki 306-0041 (JP); Tamai, Akiyoshi, Koga-shi, Ibaraki 306-0041 (JP)
(74) Representative: Nicholls, Michael John

(56) References cited:
- WO-A-01/16468
- WO-A-01/53666
- US-A- 4 142 366
- US-A- 5 148 675

## Description

The present invention relates to a joining structure of piping to a flange, which piping constitute a passage for oil, blowby gas, fuel, EGR, or the like in an internal combustion engine.

In a case of the prior art, such as described in unexamined patent publication JP-A-2000-130964 as shown in Fig. 8 of the attached drawings, on the side of a cylinder head 1 is provided an EGR passage 2 with EGR valve 3, and on the side of this EGR passage 2 is secured a flange 4 with bolts 15, 15. To the flange 4 is joined an inner pipe 7 as the end of a double-pipe 5 that constitutes an EGR tube, and also to the flange 4 is joined a branch pipe 8a parallel to the inner pipe 7. To the end of this branch pipe 8a is connected a hose 9 with a clip 10, the other end of which hose 9 is connected through a clip to a branch pipe 8b that is joined to an outer pipe 6 of the double-pipe 5.

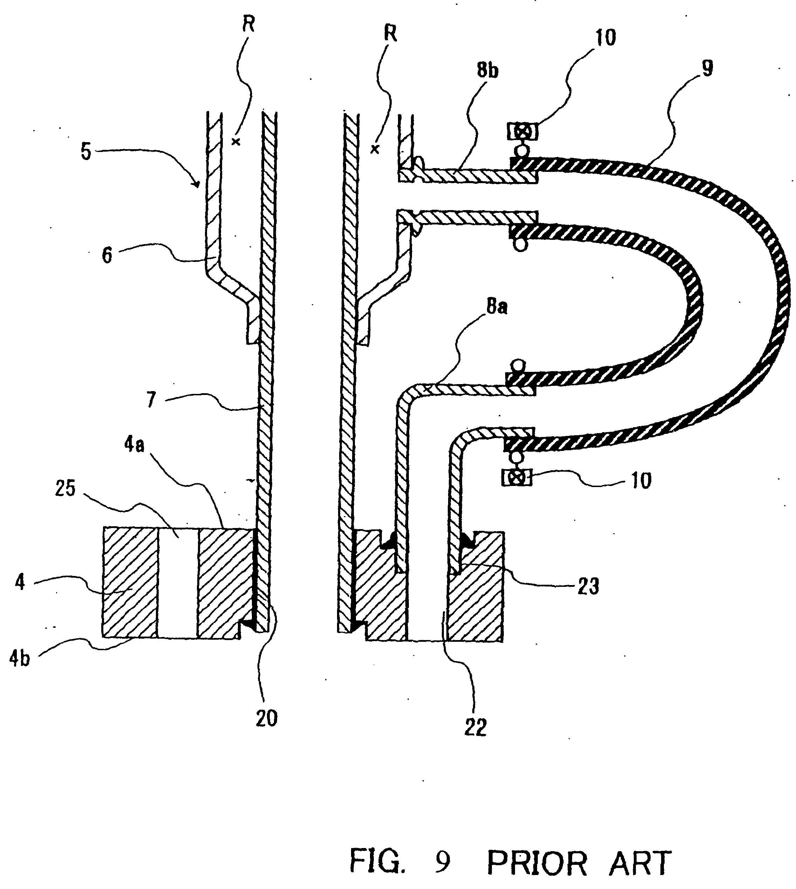

As shown in the enlarged sectional view of FIG. 9, through the flange 4 there are formed an inner pipe joining hole 20 and a through hole 22. On the front surface 4a of the flange 4 is formed a branch pipe joining hole 23 at the end of the through hole 22 and further formed bolt holes 25, 25 for the bolt 15. From this front surface 4a the inner pipe 7 and branch pipe 8a are respectively inserted into the joining holes 20, 23 and fixed by brazing or welding.

The inner pipe 7 of the dual-pipe 5 carries EGR gas and the outer pipe 6 of the same has a passage R formed around the outer periphery of the inner pipe 7, making the cooling water for an engine pass through the passage R.

Incidentally, the other end of the double-pipe 5 is connected to an intake manifold 14 and also provided with a branch pipe 11 and a hose 12, which is connected to a suction pipe 13. The cooling water in the outer pipe 6 is returned through the suction pipe 13 to a water pump.

As described above, in the piping structure of the prior art, the through hole 22 for cooling water is provided in the flange 4 and the cooling water is introduced into the double-pipe 5 by the use of the branch pipe 8a or hose 9. Accordingly, there is a problem that the need of the branch pipe, hose, etc has raised the cost.

Further, the work to fasten the hose 9 with clip 10 or the like is required and the need to separate the hose 9 from high temperature portion has been caused.

Still further, there is a problem of strength that the stress concentration is liable to occur on the joined portion of the inner pipe 7 and flange 4.

Moreover, since the brazed portion of the inner pipe 7 and flange 4 is exposed to high temperature of EGR gas, it is required to perform the brazing with Ni solder of high heat-resistance. Accordingly, there is a problem of high cost.

US-A-5,148,675 discloses a joining structure for a double pipe in accordance with the precharacterizing portion of claim 1.

The present invention is worked out in view of the above-described problems in the prior art. It is an object of the present invention to provide a joining structure of piping to a flange wherein the joining work is easy, the strength is secured, and the cost can be decreased.

Accordingly the present invention provides a joining structure as defined in claim 1.

Owing to adopting the split structure of the flange, the flange can be made of thin plate, so that it is possible for the flange to be made compact to guarantee the degree of freedom for the formation.

Further, the sectional area in the joined portion of the flange and double-pipe increases to improve the strength. Besides, the members such as branch pipes, hoses, etc in the past become useless, so-that it is possible to decrease the cost because of less number of parts.

Further, the cooling water from the through hole is well circulated around the brazed area, so that it is possible to guarantee the durability of brazing even by use of inexpensive copper solder.

Further, there is no stress concentration at the joined area of the inner pipe and the flange, so that it is possible to guarantee the strength.

The invention contemplates the following: a joint for joining a double pipe to a double orifice, e.g. in a flange, a double pipe adapted for joining to a double orifice, and to a combination of the double pipe and the flange, and/or a separate joint. The invention also extends to an internal combustion engine incorporating such arrangements.

The invention will be further described by way of example with reference to the accompanying drawings, in which:-
Fig. 1 is a perspective view of the relevant parts of a double-pipe structure joined to a flange in the first embodiment;
FIG.2 is a vertical sectional view of the structure in FIG.1;
FIG.3 is a perspective exploded view of a double-pipe structure, a front and a back flange in the second embodiment;
FIG.4 is a perspective view of the assembly composed of the members in FIG.3;
FIG.5 is an enlarged sectional view of the structure in FIG.4;
FIG.6 is a plan view of a flange in the second embodiment;
FIG.7 is a perspective view of a flange provided with a stay in the second embodiment;
FIG. 8 is a perspective view of an engine; and
FIG. 9 is an enlarged sectional view of a conventional joining structure of a flange and double-pipe in the engine of FIG. 8.

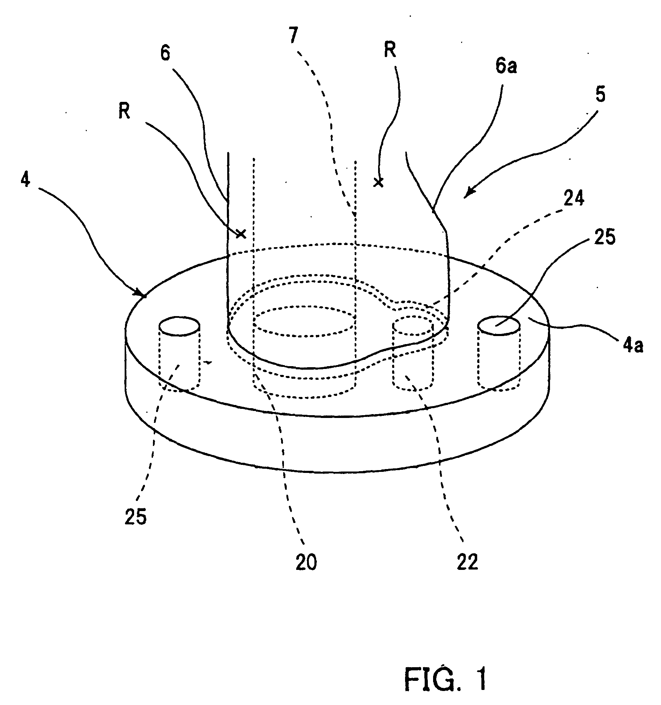

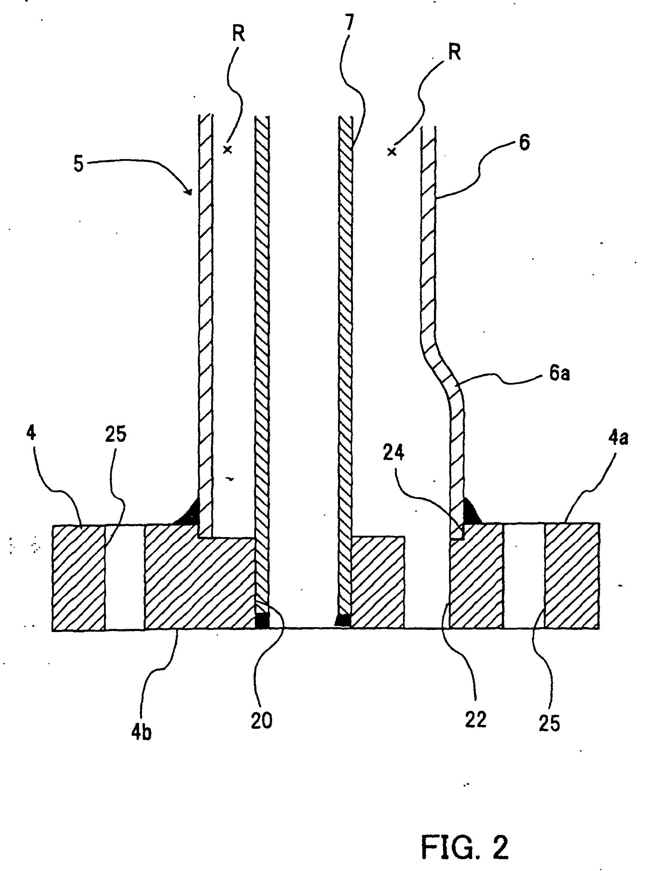

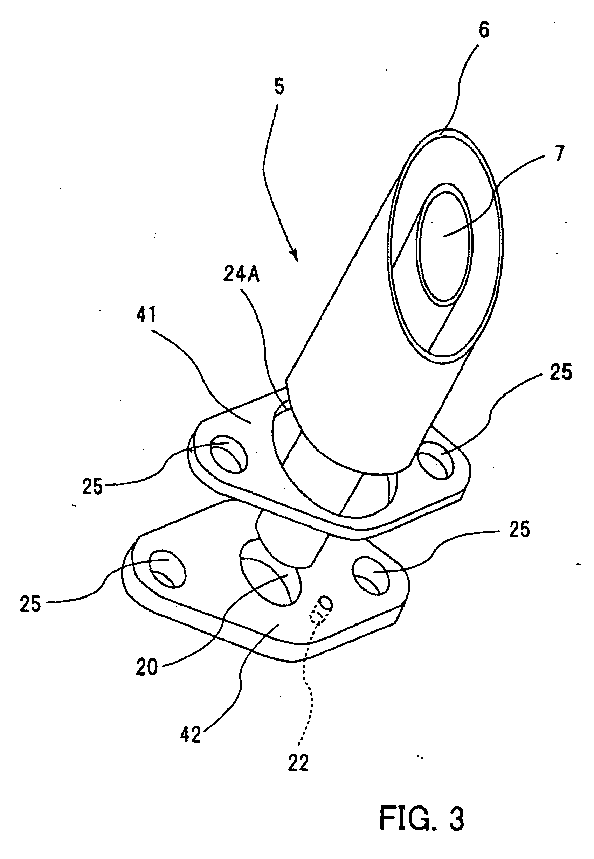

FIG. 1 is a perspective view of the relevant parts of a double-pipe structure joined to a flange which will be useful to understand the embodiment of the invention to be described and illustrated later with reference to Figures 3 to 7. FIG.2 is a vertical sectional view of the structure in FIG.1.

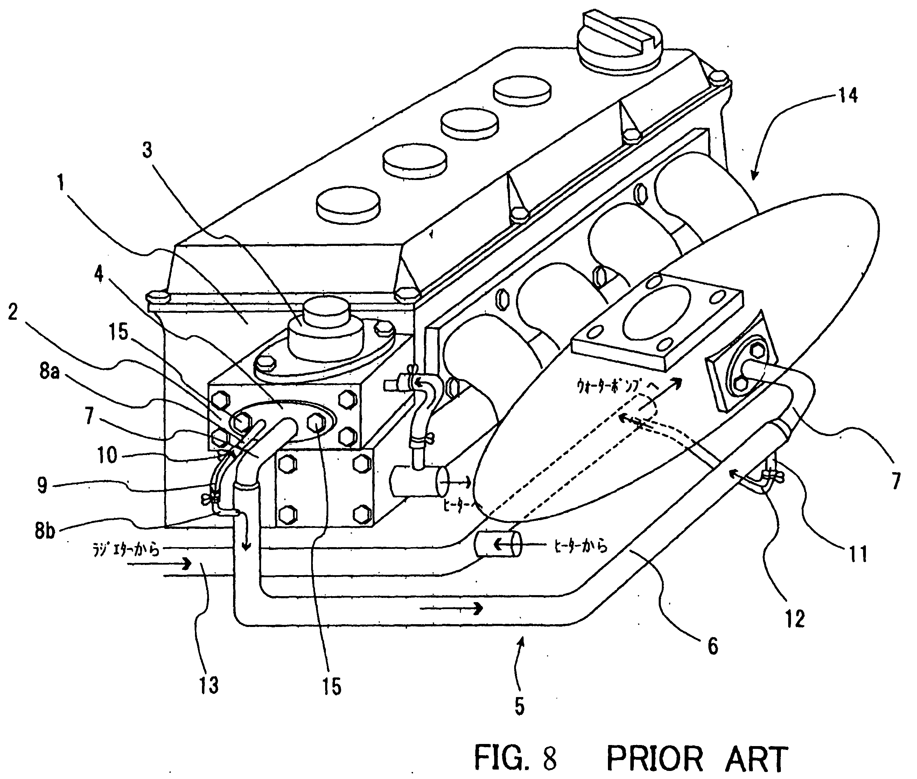

The flange 4 in this case is secured with bolts 15, 15 to the EGR passage 2 that is the same as shown in FIG. 8 referred to above. A double-pipe 5 that constitutes an EGR tube is joined to this flange 4. The double-pipe 5 is formed in double structure with the inner tube 7 and outer tube 6 outside the tube 7. Between the outside periphery of the inner tube 7 and the inner periphery of the outer tube 6 is formed a passage R to carry water. The inner tube 7 carries EGR gas.

The inner pipe 7 is formed in circular cross section. The outer pipe is also formed circular in general cross section, while the end portion of it is widened outside to form a bulging portion 6a. Accordingly, because of the bulging portion 6a, the end portion of the outer pipe 6 is in nearly gourd-shaped section.

The end of the inner pipe 7 is projected outside from that of the outer pipe 6. The dimension of this end projection of the inner pipe 7 is defined to be slightly shorter than the thickness of the flange 4.

On the other hand, through the flange 4 there is formed bolt holes 25, 25 for bolt 15 to be inserted so that the flange 4 may be secured to EGR passage 2. Also, through the flange 4, inside these holes 25, 25, is provided an inner pipe joining hole 20 for the inner pipe 7 of the double-pipe 5 to be inserted, which joining hole 20 is in circular cross section corresponding to the inner pipe 7. This inner pipe joining hole 20 can make EGR gas pass through.

Further, through the flange 4 is provided a through hole 22 to carry cooling water, and on the front surface 4a of the flange 4 is formed in hollow fashion an outer pipe joining recess 24.

This outer pipe joining recess 24 surrounds the outer periphery of the inner pipe joining hole 20 and through hole 22, having a nearly gourd-shaped outer periphery for the end of the outer pipe 6. Namely, within this outer pipe joining recess 24 formed in hollow fashion in nearly gourd-shaped section, there are pierced the inner pipe joining hole 20 and the through hole 22.

As shown in the sectional view of FIG.2, from the front surface 4a of the flange 4 the outer pipe 6 is inserted into the outer pipe joining recess 24, and the inner pipe 7 into the inner pipe joining hole 20. Then, the outer pipe 6 is brazed to the front surface 4a and the inner pipe 7 is fixed to the inner pipe joining hole 20 by brazing. Namely, the inner pipe 7 and outer pipe 6 are joined together to the flange 4 by brazing.

Even though it is attempted to join the inner pipe 7 and outer pipe 6 together to the front surface 4a of the flange 4, the brazing of the inner pipe 7 is impossible, so that the inner pipe 7 is fixed to the back surface 4b of the flange 4 by brazing. Besides, on the back surface 4b of the flange 4 is placed a gasket, through which the flange 4 is secured to EGR passage 2 in watertight fashion, so that it is needed to make the back surface 4b flat. Accordingly, the end of the inner pipe 7 is recessed from the back surface 4b as shown in FIG.2.

In the structure described above, since the inner pipe 7 and outer pipe 6 of the double-pipe 5 are joined together to the flange 4, the members such as branch pipes 8a, 8b, hose 9, etc in the prior art become unnecessary, so that it is possible to decrease the cost because of less number of parts. Besides, it is possible to make the piping in a compact structure and to secure the degree of freedom for the layout of piping.

Further, the drawing work to cause the outer pipe 6 to make contact with the inner pipe 7 as in the prior art becomes unnecessary, or the piercing work to insert the branch pipe 8b also falls into disuse, so that it is possible to decrease the cost.

Still further, the fastening work of the hose 9 becomes unnecessary and there is no stress concentration at the brazed area of the inner pipe 7 as in the prior art, so that the strength increases. Besides, since the brazed area of the inner pipe 7 to the flange 4 can be cooled by circulation of the cooling water from the through hole 22, the use of Ni solder as in the prior art becomes needless, so that it is possible to use inexpensive copper solder, etc for brazing to decrease the cost.

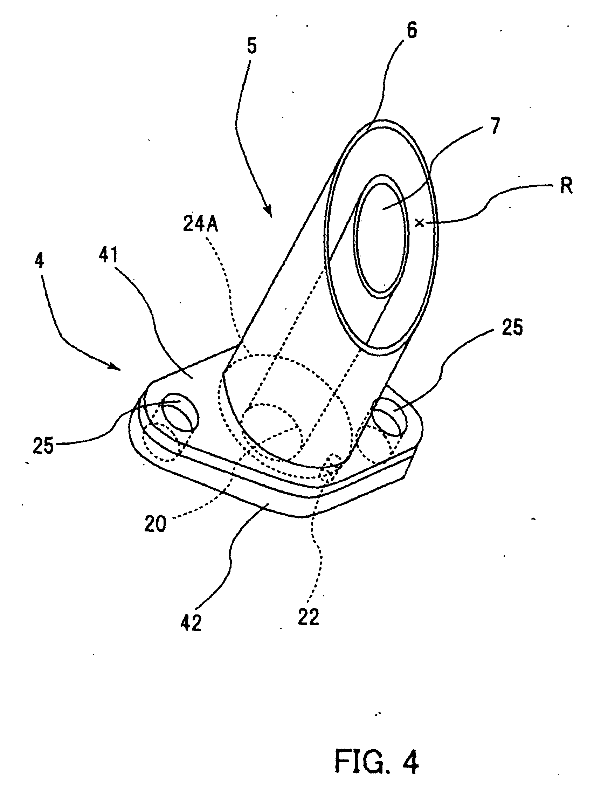

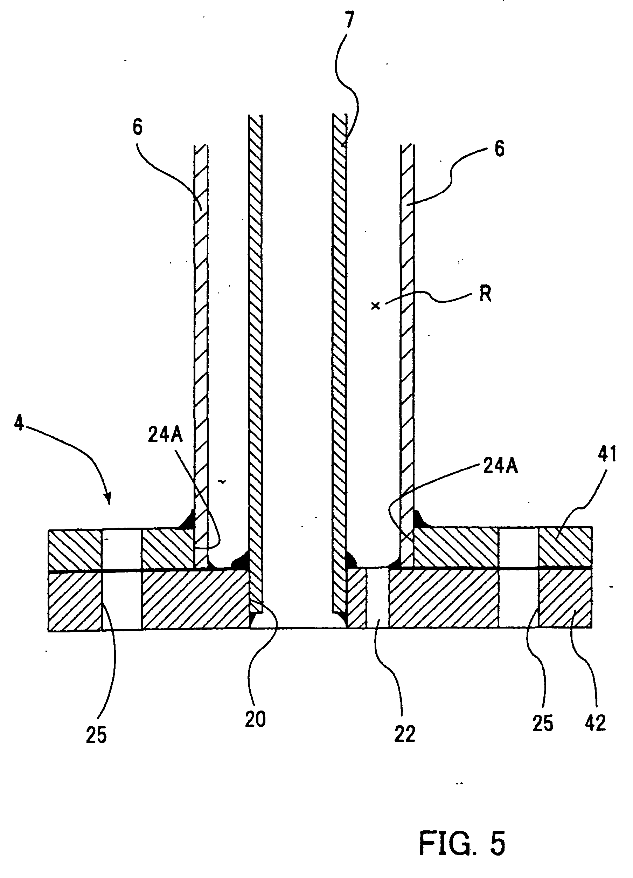

Next, an embodiment of the invention will be described with reference to the perspective exploded view of FIG.3, the perspective view of the assembly of FIG.4, and the enlarged sectional view of the structure of FIG.5. In this case, as similar to the first embodiment, the inner pipe 7 and the outer pipe 6 of the double-pipe 5 are joined together to the flange, except that the flange 4 is composed of a thin front flange 41 and a thick back flange 42.

In the center area of the front flange 41, there is pierced an outer pipe joining hole 24A with the inner diameter corresponding to the outer diameter of the outer pipe 6, outside of which hole 24A are pierced a right and a left bolt hole 25, 25 for bolts 15, 15 to be inserted.

Also, in the center area of the back flange 42, which is placed on the front flange 41 in the same outer shape, there is pierced an inner pipe joining hole 20 with the inner diameter corresponding to the outer diameter of the inner pipe 7, outside of which hole 20 is pierced a through hole 22 to carry cooling water. Also, outside of the hole 20 there are pierced a right and a left bolt hole 25, 25.

As shown in the enlarged sectional view of FIG.5, the inner pipe 7 is inserted into the inner pipe joining hole 20 of the back flange 42 to be fixed by brazing, and the back flange 42 is placed on the front flange 41 to be joined together by brazing. Also, the outer pipe 6 is inserted into the outer pipe joining hole 24A of the front flange 41 to be fixed by brazing, and in this joined condition the outer pipe 6 comes to be arranged outside the through hole 22, so that the cooling water can pass through the through hole 22 into the passage R of the double-pipe 5.

In this embodiment as described above, the formation of a complex outer pipe joining recess 24 on the flange 4 as in the first embodiment is not required, and also the formation of a bulging portion 6a at the end portion of the outer pipe 6 is needless. The front flange 41 and back flange 42 can be easily provided in pierced fashion with the joining holes 24A, 20 with true circular periphery, so that the machining cost can be decreased. Further, the members such as hoses 9 in the past become needless, so that the less number of parts makes the cost decrease.

Still further, the fastening work of the hose 9 becomes unnecessary and there is no stress concentration at the brazed area of the inner pipe 7 as in the prior art, so that the strength increases in this embodiment. Besides, since the brazed area of the inner pipe 7 to the flange 4 can be cooled by circulation of the cooling water from the through hole 22, the use of Ni solder as in the prior art becomes needless, so that it is possible to use inexpensive copper solder, etc for brazing to decrease the cost.

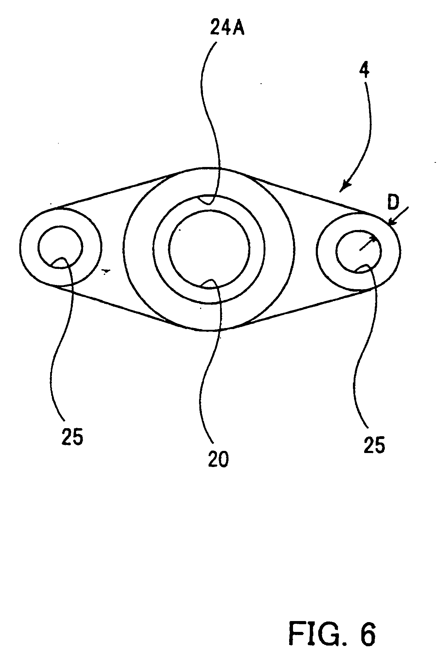

Moreover, owing to adopting the split structure of the front flange 41 and the back flange 42, the flange 4 can be made of thin plate, so that it is possible to make the peripheral dimension D of the bolt hole 25 short as shown in the plan view of FIG.6. Namely, though the dimension D should be more than the thickness of the flange plate, the flange 4 can be short in the dimension D owing to the thin plate, so that it is possible for the flange 4 to be made compact to guarantee the degree of freedom for the formation.

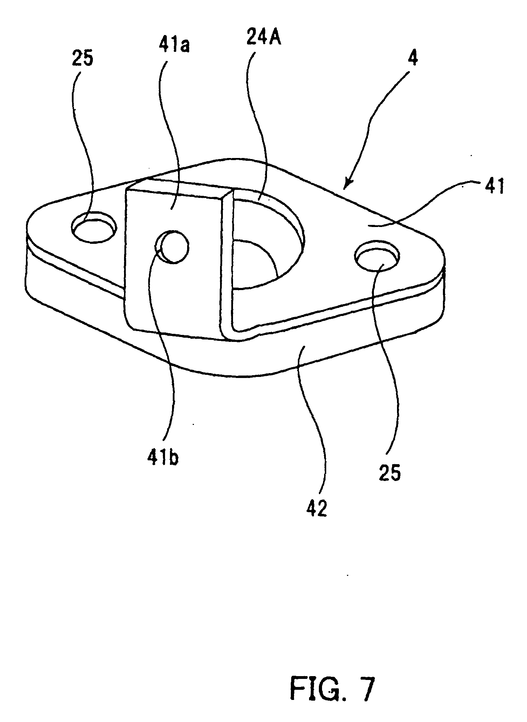

Besides, as shown in FIG.7, it is also possible to provide a stay 41a with a bolt hole 41b, which stay 41a is integrally bent on the front flange 41 made of thin plate. By utilizing such a stay 41a, it is possible to mount other parts.

Although in each aforementioned embodiment are exemplified EGR passage members for internal combustion engines where an inner pipe 7 may carry EGR gas and a passage R may pass cooling water through, such constitution as a double-pipe joined to a flange can be adopted also for the joining structure of such piping to a flange as passages for oil, blowby gas, fuel, etc in the internal combustion engines. Further, it can be used for other than the internal combustion engine, where the inner pipe 7 may carry other fluid and the passage R may pass through any coolant for cooling the fluid within the inner pipe 7.

Having described the invention in detail and by reference to the preferred embodiment thereof, it will be apparent that other modifications and variations are possible without departing from the scope of the invention defined in the appended claim.

## Claims

1. A joining structure of piping (5) to a flange (41, 42), comprising:
a double-pipe structure (6, 7) including an inner pipe (7) and an outer pipe (6);
said inner pipe (7) to carry a fluid therethrough;
said outer pipe (6) to carry a coolant through a passage (R) formed around the periphery of said inner pipe (6); and
a flange (41, 42) joining said inner and outer pipes together;
wherein on said flange (41, 42) are formed an inner pipe joining hole (20) communicating only with said inner pipe (7) and a through hole (22) communicating only with said passage (R);
**characterised in that**:
said flange (41, 42) comprises a front flange (41) and a back flange (42);
through said back flange (42) are formed the inner pipe joining hole (20) for said inner pipe (7) to be inserted and fixed by brazing and the through hole (22) outside said inner pipe joining hole (20);
through said front flange (41) is formed an outer pipe joining hole (24A) of which the periphery surrounds said inner pipe joining hole (20) and said through hole (22) and into which said outer pipe (6) is inserted and fixed by brazing; and
said front flange (41) is placed on said back flange (42) and fixed to it by brazing.

2. An internal combustion engine including a joining structure in accordance with claim 1 joining said double pipe (5) to said flange (41, 42).

## Patentansprüche

1. Fügestruktur einer Rohrleitung (5) an einem Flansch (41, 42), welche umfasst:
- eine Doppelrohrstruktur (6, 7) mit einem Innenrohr (7) und einem Außenrohr (6);
wobei das Innenrohr (7) zum Leiten eines Fluids durch dieses dient;
wobei das Außenrohr (60) zum Leiten eines Kühlmittels durch einen um den Umfang des Innenrohrs (6) ausgebildeten Durchlass (R) dient; und
- einen das Innen- und das Außenrohr zusammenfügenden Flansch (41, 42);
wobei an dem Flansch (41, 42) eine nur mit dem Innenrohr (7) in Verbindung stehende Innenrohr-Fügeöffnung (20) und eine nur mit dem Durchlass (R) in Verbindung stehende Durchgangsbohrung (22) ausgebildet sind;
**dadurch gekennzeichnet, dass**:
der Flansch (41, 42) einen vorderen Flansch (41) und einen hinteren Flansch (42) umfasst;
durch den hinteren Flansch (42) die Innenrohr-Fügeöffnung (20) für das einzusetzende und durch Hartlöten zu befestigende Innenrohr (7) und die Durchgangsbohrung (22) außerhalb der Innenrohr-Fügeöffnung (20) ausgebildet sind;
durch den vorderen Flansch (41) eine Außenrohr-Fügeöffnung (24A), deren Umfang die Innenrohr-Fügeöffnung (20) und die Durchgangsbohrung (22) umgibt, ausgebildet ist und in welche das Außenrohr (6) eingesetzt und durch Hartlöten befestigt wird; und
der vordere Flansch (41) an dem hinteren Flansch (42) angeordnet und an diesem durch Hartlöten befestigt wird.

2. Brennkraftmaschine mit einer Fügestruktur nach Anspruch 1, welche das Doppelrohr (5) mit dem Flansch (41, 42) zusammenfügt.

## Revendications

1. Structure de raccord d'une tubulure (5) à une bride (41, 42), comprenant :
une structure à double tube (6, 7) comprenant un tube intérieur (7) et un tube extérieur (6) ;
ledit tube intérieur (7) étant destiné à acheminer un fluide à travers celui-ci ;
ledit tube extérieur (6) étant destiné à acheminer un fluide de refroidissement à travers un passage (R) formé autour de la périphérie dudit tube intérieur (6) ; et
une bride (41, 42) réunissant lesdits tubes intérieur et extérieur l'un à l'autre ;
dans laquelle, sur ladite bride (41, 42), sont formés un trou de raccord de tube intérieur (20) communiquant uniquement avec ledit tube intérieur (7) et un trou traversant (22) communiquant uniquement avec ledit passage (R) ;
**caractérisée en ce que** :
ladite bride (41, 42) comprend une bride avant (41) et une bride arrière (42) ;
à travers ladite bridé arrière (42) sont formés le trou de raccord de tube intérieur (20) pour que ledit tube intérieur (7) soit inséré et fixé par brasage et le trou traversant (22) à l'extérieur dudit trou de raccord de tube intérieur (20) ;
à travers ladite bride avant (41) est formé un trou de raccord de tube extérieur (24A) dont la périphérie entoure le trou de raccord de tube intérieur (20) et ledit trou traversant (22), et à l'intérieur duquel ledit tube extérieur (6) est inséré et fixé par brasage ; et
ladite bride avant (41) est disposée sur ladite bride arrière (42) et fixée à celle-ci par brasage.

2. Moteur à combustion interne comprenant une structure de raccord selon la revendication 1 raccordant ledit double tube (5) à ladite bride (41, 42).
